# EUROPEAN PATENT SPECIFICATION

(11) **EP 2 234 097 B1**
(45) Date of publication and mention of the grant of the patent: **20.03.2013**
(21) Application number: 10000063.7
(22) Date of filing: 07.01.2010
(51) Int. Cl.: G09G 3/34

(54) **Backlight unit, driving method thereof and associated liquid crystal display apparatus**
Hintergrundbeleuchtungseinheit, zugehöriges Ansteuerungsverfahren und zugehörige Flüssigkristallanzeigevorrichtung
Unité de rétroéclairage, sa méthode de commande et affichage à cristaux liquides doté de celle-ci

(30) Priority: 25.03.2009 KR 20090025333
(43) Date of publication of application: 29.09.2010
(73) Proprietor: Samsung Display Co., Ltd., Yongin-City, Gyeonggi-Do (KR)
(72) Inventor: Amino, Tadashi, Tokyo 106-8532 (JP)
(74) Representative: Dr. Weitzel & Partner

(56) References cited:
- US-A1- 2002 003 522
- US-A1- 2008 284 719
- US-A1- 2009 002 586

## Description

### BACKGROUND

### 1. Field of the Invention

The present invention relates to a display apparatus and a driving method of the same.
More particularly, the present invention relates to a display apparatus capable of reducing a number of parts and power consumption and a method of driving the display apparatus.

### 2. Description of the Related Art

As a display apparatus that displays images, a display apparatus employing a liquid crystal panel is extensively used. The display apparatus employing the liquid crystal panel, in general, is driven by a hold-type driving mode of which a light transmitting amount is maintained until a display period of a next frame. Accordingly, when moving images are displayed, after-images occur or moving images became unfocused. In general, a frame interpolation method, which increases the number of frames and a frame frequency, is widely used to remove the after-images. However, in order to increase the frame frequency, information of a few frames is required to be maintained.

In addition, in case that light is leaked from the liquid crystal panel, it is difficult to improve a contrast ratio of a display image. To this end, a local illumination scheme is performed by dividing a backlight into a plurality of areas, controlling an amount of light emitted in each area, and providing the light to areas in which image is displayed.

According to the local illumination scheme, power consumption is reduced.

However, the information corresponding to one frame is required to be maintained in order to delay an operation time for the local illumination, To this end, when a scheme increasing the frame frequency is combined with the local illumination scheme, the amount of information that is required to be maintained increases, and thus the amount of memory required also increases.

As a result, various disadvantages are caused, such as an increase of circuit size, increase of manufacturing cost, and increase of power consumption. In addition, the display of frame is delayed due to the increase of the frame frequency and the local illumination. Thus, when sounds are output in synchronization with the frame, additional memory is required. The generation of sub-frames to enhance the frame rate is disclosed by US 2008/0284719 A1 and US 2002/0003522 A1.

### SUMMARY

Therefore, an embodiment of the present invention provides a display apparatus capable of increasing a frame frequency and performing local illumination without increasing the number of memory devices or delay time.

Another embodiment of the present invention also provides a method of driving the display apparatus.

In one aspect of the present invention, a display apparatus includes a backlight unit, an image signal receiver, a local illumination calculation unit, a backlight controller, a frame interpolator, and a pixel adjuster.

The backlight unit has a plurality of sections on which light sources are installed, and

the display unit has a plurality of pixels, which allow light generated from the light sources to pass therethrough. The image signal receiver receives an image signal of a plurality of consecutive frames to sequentially output the frames. The local illumination calculation unit calculates light amount of the sections of the backlight unit based on brightness of the frames sequentially output from the image signal receiver. The backlight controller controls the light sources based on the light amount calculated by the local illumination calculation unit and the frame interpolator generates sub-frames based on the frames sequentially output from the image signal receiver and sequentially outputs the frames and the sub-frames. The pixel adjuster adjusts light transmittance of each pixel according to pixel brightness of the frames and the sub-frames, which are sequentially output from the frame interpolator, and the light amount calculated by the local illumination calculation unit.

The pixel adjuster adjusts light transmittance of a pixel corresponding to reduction of the light amount, which is calculated by the local illumination calculation unit with respect to each section of the backlight unit, from a maximum amount of light that can be generated from each section. For example, the pixel adjuster divides the light transmittance of a pixel by 0.8 when the amount of light generated from a section of the backlight unit is reduced to 20%.

The display apparatus controls light amount of each light source of the backlight unit based on the brightness of an input frame image, and increases a frame frequency by generating the sub-frames. The display apparatus corrects the brightness of each pixel based on the light amount of each light source. Accordingly, the adjustment of the brightness of each pixel through the delay of the frame and the sub-frame is unnecessary. In addition, delay time from the acquisition of the image signal to the display of the image signal is not increased. Memory devices are not additionally required because the delay time is not increased. The power consumption of the display apparatus can be reduced due to the local illumination.

The local illumination calculation unit calculates the amount of the light, which is generated from the sections of the backlight unit, within a period at which the image signal receiver outputs a frame. The local illumination calculation unit may calculate the amount of the light at a same period as the image receiver outputs a frame as well. For example, when the image signal receiver outputs frames with an interval of 1/60 second, the local illumination calculation unit calculates light amount in the sections of the backlight unit.

Therefore, even if the display frame frequency is increased by generating the sub-frames, the increase of the operating speed of the local illumination calculation unit is not required. Accordingly, the power consumption is not increased.

In addition, the frame interpolator may output the sub-frames after outputting the frames transmitted from the image signal receiver. For example, the sub-frames may be interpolated between the frames output from the image signal receiver.

Accordingly, since each frame may have correlation with each sub-frame transmitted next to the frame, image incongruity can be prevented even if each pixel of the sub-frame is corrected using light generated based on the brightness of a frame image.

In order to interpolate the sub-frame, a difference value is calculated between two or more frames prior to the sub-frame, and applied to the last frame among the frames prior to the sub-frame, thereby generating the sub-frame.

The difference value may be a motion vector between two or more frames. In this case, the positions of pixels of the latter frame between the two frames prior to the sub-frame are moved along the motion vector so that the sub-frame may be generated.

If the motion vector cannot be calculated, the last frame among proceeding two or more frames may be employed as the sub-frame. Accordingly, even if an image has great time variation, image incongruity can be prevented.

The frame interpolator may have two frame memories, each of which can sufficiently store one frame, and the local illumination calculation unit may read out the frame from the two frame memories. Therefore, memory capacity is not additionally required.

The local illumination calculation unit can calculate brightness distribution of the pixels of the frames corresponding to the sections of the backlight unit. The local illumination calculation unit sequentially counts a number of pixels from pixels having a darkest level with respect to each section to calculate brightness of some pixels. The local illumination calculation unit requests a weighted average of the brightness calculated with respect to each section and brightness which is calculated with respect to other sections adjacent to each section, and calculates a time average of the weighted average.

The image incongruity can be prevented due to the weighted-average even if the pixels of the sub-frame are corrected by using light amount calculated based on the brightness of the frame image. In addition, the image incongruity can be prevented due to the time average even if the image has a great time variation.

In another aspect of the present invention, a display apparatus includes a backlight unit, a display unit, an image signal receiver, a frame interpolator, a local illumination calculation unit, and a pixel adjuster.

The backlight unit has a plurality of sections on which light sources are installed, and the display unit has a plurality of pixels which allow light generated from the light sources to pass therethrough. The image signal receiver receives an image signal of a plurality of consecutive frames to sequentially output the frames, and the frame interpolator generates sub-frames based on the frames sequentially output from the image signal receiver and sequentially outputs the frames and the sub-frames. The local illumination calculation unit calculates amount of the light, which is generated from the sections of the backlight unit, based on brightness of the frames sequentially output from the frame interpolator, and calculates the amount of the light, which is generated from the sections of the backlight unit, based on brightness of the sub-frames sequentially output from the frame interpolator. The pixel adjuster adjusts light transmittance of pixels of the display unit according to pixel brightness of the frames and the sub-frames, which are sequentially output from the frame interpolator, and the light amount calculated by the local illumination calculation unit. In this case, the pixel adjuster adjusts the transmittance based on brightness of sub-frames next to the frames output from the frame interpolator, and the light amount calculated by the local illumination calculation unit based on the brightness of the frames.

In this display apparatus, the light emission amount of each light source of the backlight unit is controlled by using the brightness of each pixel of a frame having a frame frequency increased due to the generation of the sub-frame. In addition, pixels are corrected based on the light amount of each light source. Accordingly, the local illumination calculation unit may have an operating speed higher than that of the display apparatus according to the previous embodiment described above. However, since the pixel adjuster adjusts transmittance of the pixels based on the pixel brightness of a sub-frame output next to a frame output from the frame interpolator and the light amount calculated by the local illumination calculation unit based on the brightness of the frame image, the memory may have the same storage capacity as that of the display apparatus according to the previous embodiment described above. In addition, the power consumption of the display apparatus can be reduced due to local illumination.

In still another aspect of the present invention, according to method of driving a display apparatus, the display apparatus includes a backlight unit having a plurality of sections on which light sources are installed, and a display unit having pixels which allow light generated from the light sources to pass therethrough. In the method of driving the display apparatus, frames used to display an image corresponding to an acquired image signal are sequentially output, and frames are sequentially output according to the image signals representing plural consecutive frames. Amount of the light, which is generated from the sections of the backlight unit, is calculated based on brightness of the frames which are sequentially output, and the light sources are controlled based on the light amount. Sub-frames are generated based on the frames, which are sequentially output, so that the frames and the sub-frames are sequentially output. Light transmittance of pixels of the display unit is adjusted according to the brightness of the frames and the sub-frames, which are sequentially output, and the light amount.

As described above, according to the display apparatus and the method of driving the same, a frame frequency can be increased, and local illumination can be realized without increasing the number of memory devices to display frames.

### BRIEF DESCRIPTION OF THE DRAWINGS

The above and other advantages of the present invention will become readily apparent by reference to the following detailed description when considered in conjunction with the accompanying drawings wherein:
FIG. 1 is a block diagram showing a display apparatus according to an embodiment of the present invention;
FIG. 2 is a time chart showing frames;
FIG. 3 is a block diagram showing the structure of a frame interpolator;
FIG. 4 is a time chart showing frames and light amount calculated by a local illumination calculation unit;
FIG. 5 is a block diagram showing the structure of the local illumination calculation unit;
FIG. 6 is a view showing target light amount obtained in each section;
FIG. 7 is a view showing target light amount generated by a light source provided in each section;
FIG. 8 is a view showing target light amount generated from the light source provided in each section and temporally adjusted;
FIG. 9 is a block diagram showing a display apparatus according to another embodiment of the present invention; and
FIG. 10 is a timing chart showing light amount calculated by a local illumination calculation unit.

### DESCRIPTION OF THE EMBODIMENTS

Hereinafter, preferred embodiments according to the present invention will be described in more detail with reference to the accompanying drawings.

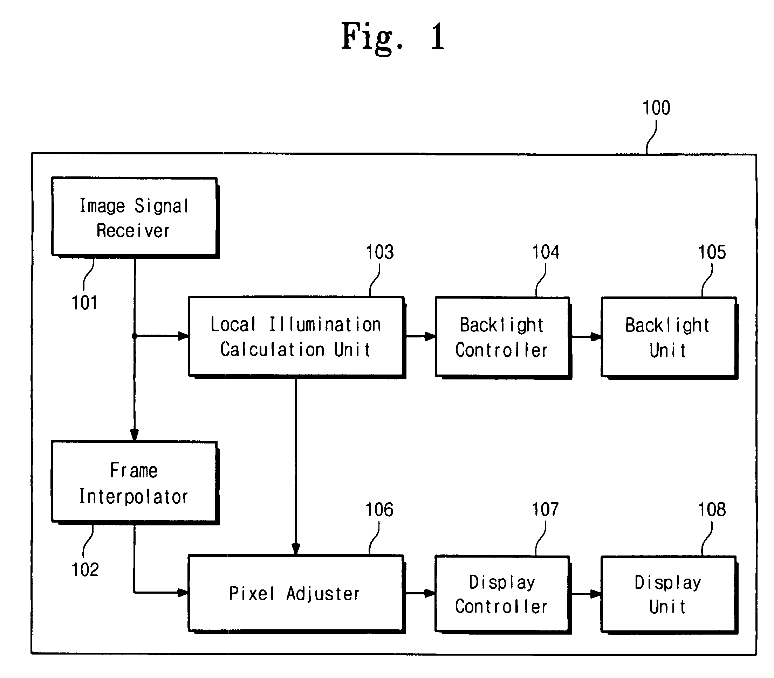

FIG. 1 is a block diagram showing a display apparatus 100 according to an embodiment of the present invention.

Referring to FIG. 1, the display apparatus 100 includes an image signal receiver 101, a frame interpolator 102, a local illumination calculation unit 103, a backlight controller 104, a backlight unit 105, a pixel adjuster 106, a display controller 107, and a display unit 108.

The image signal receiver 101 receives an image signal. The image signal is received, e.g., by a tuner of a TV, reproduced from contents recorded on media by a reader, or generated through the execution of an application program or a player program by a computer (e.g., a personal computer), so that the image signal is received by the image signal receiver 101.

According to the present invention, an image can be displayed in a frame unit by the image signal. When the image is displayed according to the image signal, a progressive scheme may be used to express the whole portion of one frame through one scanning operation. In addition, an interlace scheme may be used to display the image by dividing the image into fields acquired by scanning odd-number scan lines and even-number scan lines, respectively.

The image signal received in the image signal receiver 101 is not required to have only signals consecutively representing information of plural frames. Between former and latter frames, the image signal may include a signal (e.g., a synchronization signal) representing information which is not directly related to the frames. In addition, the image signal receiver 101 is not required to consecutively output the frames. In other words, a predetermined time interval may exist between the former and latter frames.

According to one embodiment of the present invention, after the image signal received in the image signal receiver 101 is transformed, frames for image display are consecutively output from the image signal receiver 101. Then, according to the present embodiment, the frames output from the image signal receiver 101 are transmitted to both the frame interpolator 102 and the local illumination calculation unit 103.

The backlight unit 105 generates light for image display. According to the present embodiment, when a liquid crystal panel is used as the display unit 108, the backlight unit 105 directly or indirectly irradiates light from the lowest portion of the liquid crystal panel. In this case, the backlight unit 105 includes a light emitting surface to generate light transmitted to pixels of the liquid crystal panel. According to one embodiment of the present invention, the light emitting surface is divided into a plurality of sections, and a light source is provided in each section to control the light emission amount. For example, the backlight unit 105 may employ a light emitting diode (LED) as the light source to rapidly change light emission amount.

The backlight unit 105 is divided into several sections arranged in the form of a matrix in transverse and longitudinal directions. A plurality of LED groups are provided in each section. For example, the plural LED groups are provided to emit red (R), green (G), and blue (B) light. In order to remove a difference in light emission amount according to the positions of the sections, light from the LEDs may be diffused by a light diffusion plate and irradiated onto the display unit 108. Hereinafter, the sections of the backlight unit 105 are designated as row and column numbers. For example, a section, which is positioned in an i^{th} row and a j^{th} column, is expressed as "Sᵢⱼ"

The display unit 108 includes a plurality of pixels. Each pixel of the display unit 108 can control transmittance of light generated from the backlight unit 105. The pixels display an image by controlling the light transmittance. The display unit 108 may include the liquid crystal panel on which liquid crystal pixels are arranged in the form of a matrix.

The frame interpolator 102 generates sub-frames for frame interpolation based on a series of frames consecutively output from the image signal receiver 101. The sub-frames are generated and added to the series of frames, thereby increasing a frame frequency of the image signal. In other words, time required to output each frame or each sub-frame can be reduced, and time required to display an image represented by each frame or each sub-frame can be reduced.

After a difference value between two consecutive frames is calculated, information of a predicted image based on the difference value can be generated as a sub-frame. In order to generate the sub-frame, the variation of each pixel of a frame is found based on a requested difference value, and the variation is applied into each pixel of a frame, thereby generating the sub-frame. The generation of the sub-frame is signified by the difference value being applied to the latter frame. If an image of the former frame is moved in the latter frame, a vector can be calculated by finding a motion vector that minimizes a difference value in brightness between the former frame and a moved frame by the motion vector.. In addition, instead of finding the movement direction and movement distance (motion vector) of the whole frame, the frame is divided into blocks based on a motion picture experts group (MPEG), and a motion vector of each block may be found as a difference value. Then, the difference value is applied to pixels of the latter frame, thereby generating a sub-frame.

If the former and latter frames have a low correlation or have no correlation therebetween due to the change of a scene, the motion vector cannot be calculated. In this case, the frame interpolator 102 may output the last frame output from the image signal receiver 101 as the sub-frame.

In addition, the sub-frame can be obtained by finding the variation between pixels of the two consecutive frames in terms of an RGB value or a luminance/contrast/color value. That is, the variation is calculated as a difference value between pixels of the two consecutive frames, and the sub-frame is generated on the assumption that the difference value is maintained between two consecutive frames. For example, in a specific pixel, an R value of a latter frame is reduced by "Δ" with respect to an R value of a former frame, "-Δ" is calculated as a difference value, and a sub-frame is generated by adding "Δ/2" to an R value of the pixel of the latter frame, so that the sub-frame is interpolated between the latter frame and a next frame of the latter frame. The R value can be, for example, the RGB value or the luminance/contrast/color value of the pixel.

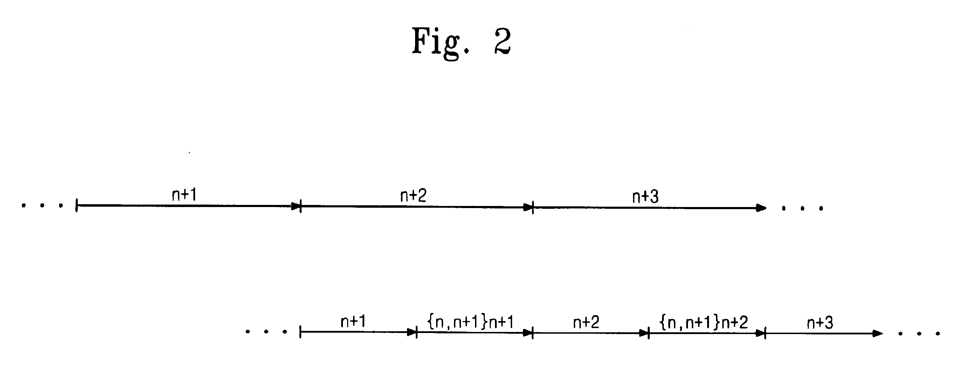

FIG. 2 is a timing chart showing sub-frames corresponding to frames formed by the image signals transmitted from the image signal receiver 101.

As shown in FIG. 2, a series of frames is output from the image signal receiver 101 in order of an (n+1)^{th} frame (n+1), an (n+2)^{th} frame (n+2), an (n+3)^{th} frame (n+3), etc. (as shown in the upper timeline). Hereinafter, a difference value between an i^{th} frame and an (i+1)^{th} frame that is a next frame of the i^{th} frame is expressed as "{i, i+1}", and a sub-frame generated by applying the difference value to the (i+1)^{th} frame is expressed as "{i, i+1}i+1".

As shown in FIG. 2, while the (n+2)^{th} frame (n+2) is being received from the image signal receiver 101, the frame interpolator 102 outputs the (n+1)^{th} frame (n+1) received prior to the (n+2)^{th} frame (n+2). Simultaneously, the frame interpolator 102 calculates the difference value {n,n+1}. In addition, the frame interpolator 102 outputs a first sub-frame {n,n+1}n+1 (as shown in the lower timeline) while receiving the (n+2)^{th} frame (n+2). Thereafter, while the image signal corresponding to an {n+3}^{th} frame (n+3) is being received from the image signal receiver 101, the frame interpolator 102 outputs the (n+2)^{th} frame (n+2) and an (n+2)^{th} sub-frame ({n,n+2}n+2). Accordingly, time corresponding to one frame is required until a predetermined frame of the image signal is output from the frame interpolator 102 after the frame has been output from the image signal receiver 101. For example, when 60 frames exist during one second, 1/60 second is required. As shown in FIG. 2, for the case when 60 frames exist during one second, the frame interpolator 102 outputs 120 frames during one second. In detail, as shown in FIG. 2, 1/60 second is required until the frame interpolator 102 starts to output the (n+1)^{th} frame (n+1) of the image signal after the image signal receiver 101 has output the (n+1)^{th} frame n+1 of the image signal, so that time delay may occur.

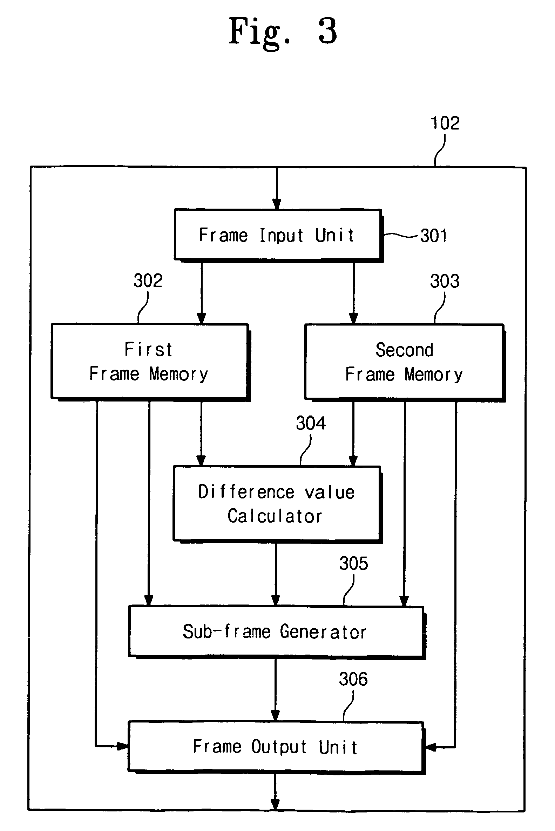

FIG. 3 is a block diagram showing the structure of the frame interpolator 102.

Referring to FIG. 3, the frame interpolator 102 includes a frame input unit 301, a first frame memory 302, a second frame memory 303, a difference value calculator 304, a sub-frame generator 305, and a frame output unit 306.

The frame input unit 301 selectively inputs frames of the image signal from the image signal receiver 101 into the first and second frame memories 302 and 303. In one example, the first frame memory 302 has storage capacity sufficient to memorize one frame. Similarly, in another example, the second frame memory 303 has storage capacity sufficient to memorize one frame. The difference value calculator 304 reads out former and latter frames of two frames input into the first and second frame memories 302 and 303 to calculate a difference value between the former and latter frames. The sub-frame generator 305 applies the difference value from the difference value calculator 304 to the latter frame of the frames input into the first and second frame memories 302 and 303 to generate a frame predicted as a sub-frame intermediate between the former and latter frames. The frame output unit 306 sequentially outputs the frames, which have been stored in the first and second frame memories 302 and 303, and the sub-frame, which has been generated from the sub-frame generator 305, as shown in the timing chart of FIG. 2.

Referring back to FIG. 1, the local illumination calculation unit 103 calculates the light emission amount of a light source provided in each section of the backlight unit 105 after sequentially receiving frames from the image signal receiver 101. Then, the local illumination calculation unit 103 provides the light emission amount to the display unit 108 to display an image based on the frame. The light emission amount is used when the display unit 108 displays an image corresponding to the frame transmitted from the image signal receiver 101. Generally, the brightness of light sources provided in the sections of the backlight unit 105 is set such that each pixel of the display unit 108 to display an image corresponding to each section has the maximum brightness. However, since the number of pixels having the maximum brightness is small, light having brightness lower than the maximum brightness may be generated.

According to the present embodiment, the local illumination calculation unit 103 acquires frames from the image signal receiver 101 and calculates a light amount required to display images corresponding to the frames. According to the present embodiment, the local illumination calculation unit 103 calculates light emission amount (Dᵢⱼ^{k}) of a light source provided in a section (Sᵢⱼ) necessary to display a k^{th} frame (k). Meanwhile, even though light emission amount of the light source provided in the section (Sᵢⱼ) is represented as "Dᵢⱼ^{k}", the same light emission amount may not be obtained in all sections. For example, if light emission amount of a light source in a predetermined section is "0", light emission amount is gradually reduced in the direction of the predetermined section. Accordingly, the Dᵢⱼ ^{k} may be calculated by taking into consideration the variation of light amount in each section. The variation of the light amount is determined based on light emission amount of a light source provided in another section. The Dᵢⱼ^{k} may have a vector quantity including several scalar quantities, instead of a single scalar quantity. In this case, each scalar quantity may represent light amount related to the position of each light source or the position of each pixel.

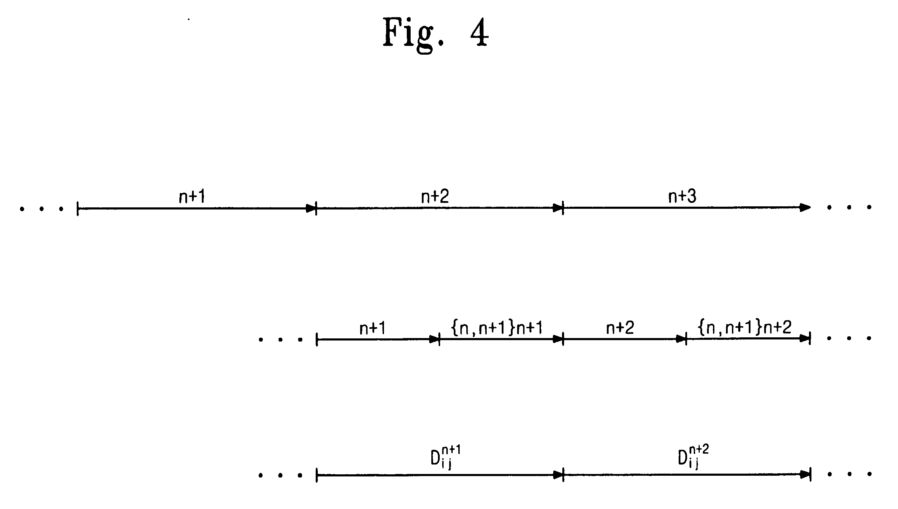

FIG. 4 is a timing chart showing frames output from the image signal receiver 101 (as shown in the top timeline), frames output from the frame interpolator 102 (as shown in the middle timeline), and light emission amount of a light source in a section that is positioned in an i^{th} row and a j^{th} column (hereinafter, referred to as " an (i×j)^{th} section) (as shown in the bottom timeline).

In other words, FIG. 4 is a view showing light amount calculated by the local illumination calculation unit 103 according to the change of time in addition to FIG. 2. As shown in FIG. 4, according to the present embodiment, when the display unit 108 controls light transmittance in response to the (n+1)^{th} frame (n+1) and the (n+1)^{th} sub-frame ({n, n+1}n+1) that have been output from the frame interpolator 102, light emission amount of a light source provided in the section of the backlight unit 105 becomes Dᵢⱼⁿ⁺¹. When the display unit 108 controls light transmittance in response to the (n+2)^{th} frame (n+2) and the (n+2)^{th} sub-frame ({n, n+1}n+2) that have been output from the frame interpolator 102, light emission amount of a light source provided in the section of the backlight unit 105 becomes Dᵢⱼⁿ⁺².

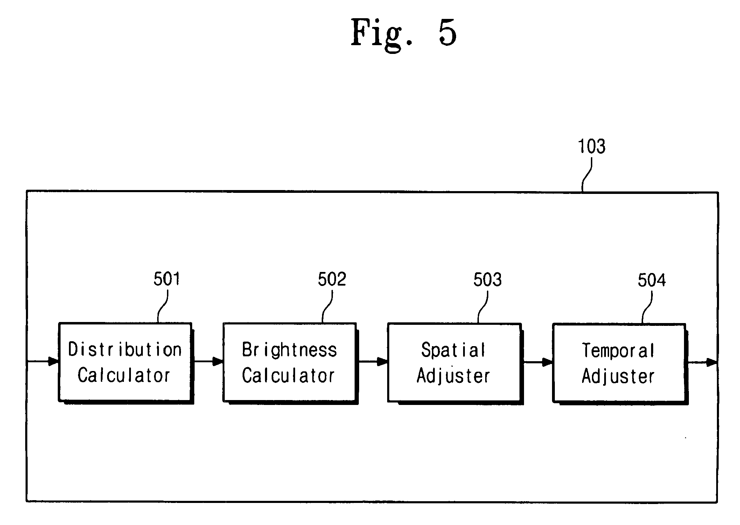

FIG. 5 is a block diagram showing the structure of the local illumination calculation unit 103. Referring to FIG. 5, the local illumination calculation unit 103 includes a distribution calculator 501, a brightness calculator 502, a spatial adjuster 503, and a temporal adjuster 504.

In order to display the image on the display unit 108, the distribution calculator 501 calculates the number of pixels in each section of the backlight unit 105 while classifying the pixels according to brightness levels of the pixels. In other words, the distribution calculator 501 calculates the distribution of the brightness levels in each section after light generated from the section (Sᵢⱼ) for the frame passes through pixels. Meanwhile, brightness levels after the light generated from the Sᵢⱼ has been transmitted to pixels are referred to as pixel brightness in the Sᵢⱼ. The distribution of the pixel brightness in the Sᵢⱼ may be calculated by using the value of each primary color (red (R), green (G), or blue (B)). In addition, when a color specified by using an RGB value is converted into a color having a luminance/contrast/saturation value, the distribution of the pixel brightness may be calculated using luminance values.

The brightness calculator 502 calculates light amount of a light source provided in each section based on the distribution of the brightness levels obtained from the distribution calculator 501. For example, the brightness calculator 502 counts the number of pixels corresponding to a brightness level sequentially from the darkest brightness level of "0" and finds the brightness level when the number of the pixels corresponding to the brightness level exceeds a preset value. In contrast, the brightness calculator 502 may count the number of pixels corresponding to a brightness level sequentially from the maximum brightness level and find the brightness level when the number of pixels corresponding to the brightness level exceeds the preset value.

For example, the preset value may be defined as 95% of the total number of pixels.
The preset value may not be an integer. The preset value may be varied according to standard deviation of the distribution of the brightness levels. For example, if the standard deviation is less, the preset value may be set to approximately 100% of the total number of pixels.

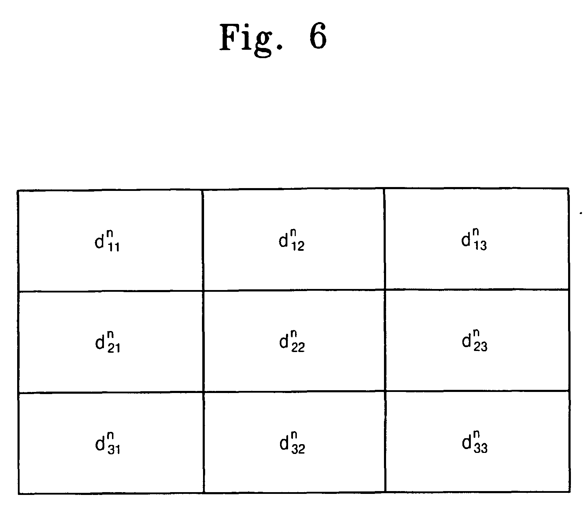

FIG. 6 is a view showing target light amount (dᵢⱼⁿ) obtained in the section (Sᵢⱼ) with respect to the n^{th} frame (n). In addition, the brightness calculator 502 may calculate an average (dᵢⱼⁿ) of the light amount calculated corresponding to each frame.

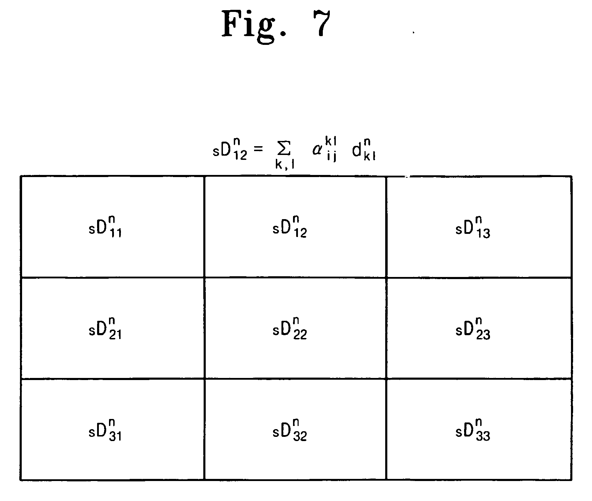

The spatial adjuster 503 averages the light amount calculated by the brightness calculator 502 based on light amount in neighboring sections. For example, as shown in FIG. 7, target light amount (sDᵢⱼⁿ) that may be produced from a light source provided in each section is calculated through a weighted-average. In other words, values obtained by multiplying the Dᵢⱼⁿ by a predetermined weight aᵢⱼ^{k1} sum up with respect to k and i to calculate the sDᵢⱼⁿ.

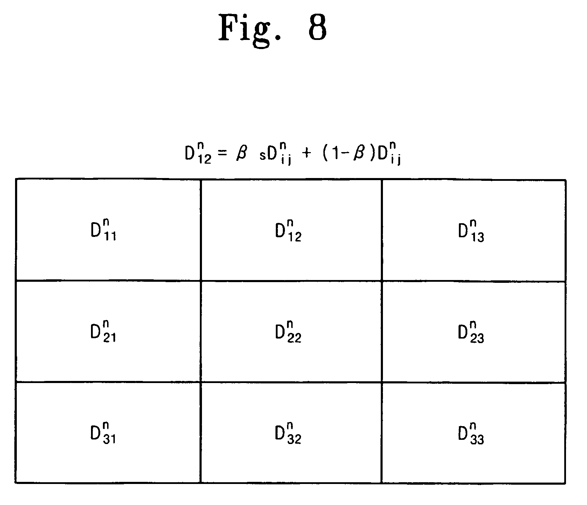

The temporal adjuster 504 finds a time average of the light amount averaged by the spatial adjuster 503. FIG. 8 is a view showing light amount that may be produced from a light source in each section and calculated based on both "Dᵢⱼⁿ⁻¹" for a previous frame and "sDᵢⱼⁿ" for a present frame. When β is defined as a number from 0 to 1, the sDᵢⱼⁿ and the Dᵢⱼⁿ⁻¹ are internally divided in the ratio of β to 1-β to calculate the Dᵢⱼⁿ. The β may be an integer, or a value calculated through a predetermined process according to the variation in the brightness of a frame. In addition, the value calculated from the spatial adjuster 503 may be used with respect to the past three frames or more as well as the previous frame.

The backlight controller 104 outputs a control signal to control a light source provided in each section of the backlight unit 105 such that the light source can represent light emission amount calculated from the local illumination calculation unit 103. For example, the control signal may be used to adjust power supplied to the backlight unit 105, and control the light source such that the light source represents the light emission amount calculated from the local illumination calculation unit 103. For example, the control signal may be used to apply a voltage corresponding to the light emission amount to LEDs of each section. In addition, the control signal may be used to apply a signal having a duty ratio according to the light emission amount to the LEDs of each section.

When displaying an image for frames and sub-frames sequentially output from the frame interpolator 102, the pixel adjuster 106 adjusts transmittance of each pixel in response to light emission amount of a light source in each section which is calculated by the local illumination calculation unit 103. In detail, the pixel adjuster 106 adjusts a brightness level of each pixel representing an image corresponding to the frames and the sub-frames output from the frame interpolator 102 in response to the light emission amount of the light source calculated by the local illumination calculation unit 103. For example, when a brightness level of a specific pixel representing an image of the n^{th} frame (n) is defined as "Pⁿ", the pixel may display an image by light of a light source producing the Dᵢⱼⁿ. In addition, when the brightness in the pixel is defined as Lᵢⱼⁿ, transmittance is changed such that a brightness level of the pixel becomes "Pⁿ * MAX/ Lᵢⱼⁿ". The term "MAX" means the maximum brightness level (e.g., MAX=255). If the "Pⁿ * MAX/ Lᵢⱼⁿ" exceeds the maximum brightness level, the "Pⁿ * MAX/ Lᵢⱼⁿ" is set to a value of the MAX.

The display controller 107 outputs a control signal to the display unit 108 such that transmittance of each pixel of the display unit 108 is adjusted to the transmittance regulated by the pixel adjuster 106. In other words, the display controller 107 applies the control signal to the display unit 108 such that the display unit 108 displays an image with a brightness level of each pixel regulated by the pixel adjuster 106.

Meanwhile, according to the present embodiment, an image corresponding to frames can be displayed on the display unit 108 according to timing shown in FIG. 4. In addition, the display unit 108 further includes a controller which controls the backlight unit 105 to generate light. The local illumination calculation unit 103 may adjust timing to output the Dᵢⱼⁿ, so that timing shown in FIG. 4 can be realized.

According to the present embodiment, the display unit 108 increases a frame frequency, and delays an image signal received in the image signal receiver 101 by one frame in order to realize local illumination as shown in FIG. 1. When a sub-frame is generated by using two frames, the frame interpolator 102 may include a storage space capable of storing two frames.

Further, since the local illumination calculation unit 103 can be operated using a frame frequency which is not increased, the increase of the operating frequency is unnecessary and the increase of power consumption can be prevented.

In addition, an image signal that has been received in the image signal receiver 101 may be output only to the frame interpolator 102 in a frame unit. In this case, the local illumination calculation unit 103 may calculate brightness distribution of each section by directly reading out a frame stored in the first frame memory 302 or the second frame memory 303 without calculating the brightness distribution of each section by memorizing the frame output from the image signal receiver 101.

If the difference value {n, n+1} between frames is calculated as a motion vector, and the frame image is still represented corresponding to a specific section after a portion of a frame image, which has been displayed corresponding to the specific section, has been moved, image incongruity does not occur even if the (n+1)^{th} sub-frame ({n, n+1}n+1) is displayed using the light amount Dᵢⱼⁿ⁺¹. In addition, if the frame image is mainly displayed corresponding to neighboring sections after the portion of the frame image has been moved, and if k differs from l, the spatial adjuster 503 increases αᵢⱼ^{kl} such that the image incongruity may not occur even if the (n+1)^{th} sub-frame ({n, n+1}n+1) is displayed using the light amount Dᵢⱼⁿ⁺¹.

In addition, the operating frequency of the local illumination calculation unit 103 is increased, and the difference value {n, n+1} is obtained from the frame interpolator 102, so that light emission amount of a light source of the S ᵢⱼ required to display the (n+1)^{th} sub-frame ({n, n+1}n+1) can be calculated by using the difference value {n, n+1} and the Dᵢⱼⁿ⁺¹ until the (n+1)^{th} sub-frame ({n, n+1}n+1) is displayed. For example, the light emission amount of the light source in the S ᵢⱼ is defined as light emission amount of a light source provided in a section obtained after the section S ᵢⱼ has been moved according to the motion vector.

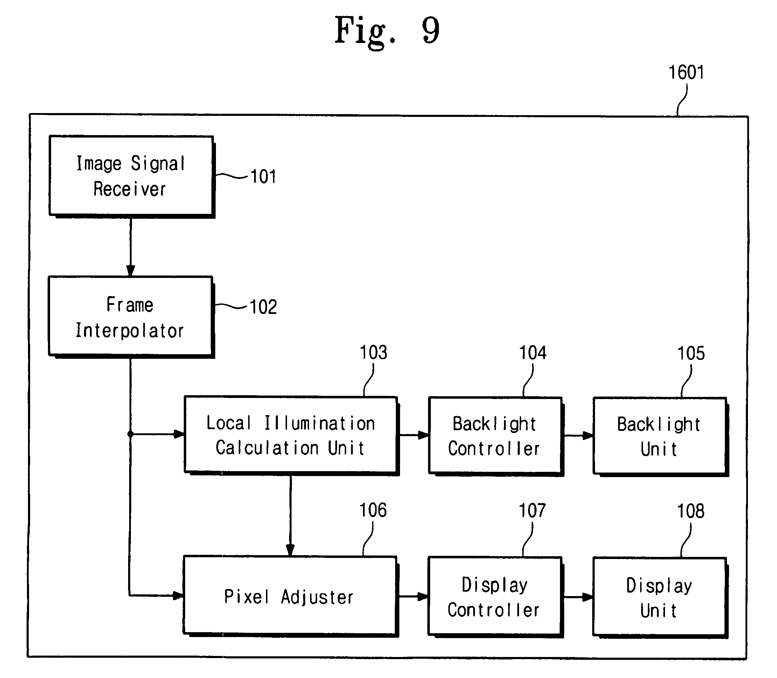

FIG. 9 is a block diagram illustrating a display apparatus 1601 according to another embodiment of the present invention.

Referring to FIG. 9, the display apparatus 1601 includes the image signal receiver 101, the frame interpolator 102, the local illumination calculation unit 103, the backlight controller 104, the backlight unit 105, the pixel adjuster 106, the display controller 107, and the display unit 108.

According to the present embodiment, after an image signal received in the image signal receiver 101 is subject to a predetermined conversion process, the image signal is transferred to the frame interpolator 102. The frame interpolator 102 generates a sub-frame to increase the frame frequency of the image signal, and outputs the image signal to the pixel adjuster 106 and the local illumination calculation unit 103. The local illumination calculation unit 103 calculates light emission amount, which is produced from each section of the backlight unit 105, based on frames of the image signal having the increased frame frequency, so that an operating speed of the local illumination calculation unit 103 is N times as fast as the operating speed in the previous embodiment of the present invention. For example, if the frame frequency is increased by two times, the operating speed of the local illumination calculation unit 103 is twice as fast as the operating speed in the previous embodiment of the present invention.

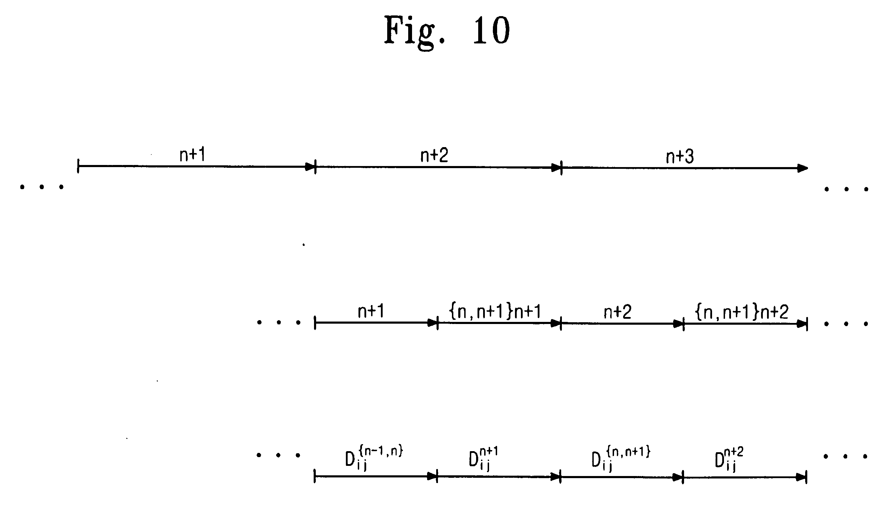

FIG. 10 is a timing chart showing the light amount calculated by the local illumination calculation unit 103 in addition to FIG. 2.

As shown in FIG. 10, while an (n+1)^{th} frame (n+1) output from the frame interpolator 102 is being displayed on the display unit 108, the backlight unit 105 generates light amount (Dᵢⱼ^{{n-1,n}}). The Dᵢⱼ^{{n-1,n}} is calculated based on an n^{th} sub-frame ({n-1, n}n). Further, while an (n+1)^{th} sub-frame ({n,n+1}n+1) output from the frame interpolator 102 is being displayed on the display unit 108, the backlight unit 105 generates light amount (Dᵢⱼⁿ⁺¹). That is, the Dᵢⱼⁿ⁺¹ and Dᵢⱼⁿ⁺² are calculated based on the sub-frames subsequent to an (n+1)^{th} frame (n+1) and an (n+2)^{th} frame (n+2), respectively. This process is equal to the process performed in the previous embodiment. However, regarding another frame and another sub-frame, a display operation is performed using light amount calculated based on a frame and a sub-frame prior to another frame and another sub-frame. Accordingly, the present embodiment includes the local illumination calculation unit 103 or the backlight controller 104 to increase the light amount generated from the backlight unit 105, as in the case of the previous embodiment.

According to the display apparatus of the present embodiment, the image signal received in the image signal receiver 101 is delayed by one frame as shown in FIG. 10, so that the frame frequency can be increased and the local illumination can be achieved. Further, in the case of generating a sub-frame using two frames, a storage space can be provided in the frame interpolator 102 to store two frames.

Further, the local illumination calculation unit 103 can calculate brightness distribution with respect to each section by directly reading frames stored in a first frame memory 502 and a second frame memory 503, instead of calculating the brightness distribution of each section by using the frames and the sub-frames output from the frame interpolator 102. In such a case, only a storage area corresponding to the total two frames is required.

Although embodiments of the present invention have been described, it is understood that the present invention should not be limited to these embodiments but various changes and modifications can be made by one ordinary skilled in the art within the spirit and scope of the present invention as hereinafter claimed.

## Claims

1. A display apparatus, comprising:
a backlight unit (105) having a plurality of sections each generating a light;
a display unit (108) having a plurality of pixels allowing the light to pass therethrough;
an image signal receiver (101) with means to receive an image signal having a plurality of consecutive frames and with means to sequentially output the frames to a frame interpolator (102);
a local illumination calculation unit (103) with means to calculate a target amount of the light for the sections of the backlight unit (105) and with means to output signals to a backlight controller (104) of the backlight unit (105)
a pixel adjuster (106) with means to receive signals from the frame interpolator (102) and the local illumination calculation unit (103) and with means to output signals to a display controller (107) of the display unit (108);
the display controller (107) being arranged to apply control signals to the display unit (108) in response to the signals output from the pixel adjuster (106) such that transmittance of each pixel of the display unit (108) is adjusted,
wherein the pixel adjuster (106) and the display controller (107) are arranged such that the display unit (108) displays an image with a brightness level of each pixel adjusted by the pixel adjuster (106), the image corresponding to the output from the frame interpolator (102), by adjusting the transmittance of each pixel of the display unit (108) in response to the target amount of light emitted by the corresponding section of the backlight unit (105) calculated by the local illumination calculation unit (103),
**characterized in that**
the frame interpolator (102) comprises a difference value calculator (305), arranged to calculate a difference value between an n-th frame and a consecutive (n+1)-th frame; and a sub-frame generator (304), arranged to generate an (n+1)-th sub-frame by applying the calculated difference value to the (n+1)-th frame; and
wherein the frame interpolator (102) is arranged to output the (n+1)-th sub-frame to the pixel adjuster (106) after the (n+1)-th frame and during the receipt of an (n+2)-th frame, which is consecutive to the (n+1)-th frame, by the image signal receiver (101), and to output the (n+2)-th frame thereafter.

2. The display apparatus of claim 1, wherein the difference value calculator (304) is arranged to calculate at least one motion vector between the n-th and (n+1)-th frames as the difference value, and the sub-frame generator (305) is arranged to generate the (n+1)-th sub-frame by shifting positions of pixels in the (n+1)-th frame along a direction of the motion vector calculated by the difference value calculator (304).

3. The display apparatus of claim 2, wherein the display apparatus further comprises means to determine a correlation value between the n-th frame and the (n+1)-th frame; wherein the frame interpolator (102) is arranged to generate the (n+1)-th sub-frame equal to the (n+1)-th frame when the correlation value is below a given threshold.

4. The display apparatus of claim 1, wherein the frame interpolator (102) comprises two frame memories to store the n-th frame and the (n+1)-th frame, respectively, and
the local illumination calculation unit (103) is arranged to read the (n+1)-th frame from one of the two frame memories to calculate the target amount of the light.

5. The display apparatus of claim 1, wherein the local illumination calculation unit (103) comprises:
a distribution calculator (501), arranged to calculate a brightness distribution of the pixels of the (n+1)-th frame with respect to each section;
a brightness calculator (502), arranged to sequentially count a number of pixels from a pixel having a darkest level based on the brightness distribution of the pixels with respect to each section, and arranged to calculate brightness when the number of the pixels exceeds a predetermined value;
a spatial adjuster (503), arranged to calculate a weighted average of the brightness calculated for each section and brightness calculated for sections adjacent to the each section; and
a temporal adjuster (504), arranged to calculate a time average of the weighted average calculated with respect to each section.

6. The display apparatus of claim 1, wherein the pixel adjuster (106) is arranged to adjust the transmittance of the (n+1)-th sub-frame according to pixel brightness of the (n+1)-th sub-frame and the target amount of the light calculated by the local illumination calculation unit (103) based on the brightness of the (n+1)-th frame.

7. A method driving a display apparatus provided with a backlight unit (105) having a plurality of sections each of which generates a light and a display unit (108) having pixels that allow the light to pass therethrough, the method comprising:
receiving an image signal having a plurality of consecutive frames and sequentially outputting the frames to a frame interpolator (102);
calculating a target light amount of the sections of the backlight unit (105) with a local illumination calculation unit (103), which outputs signals to a backlight controller (104) of the backlight unit (105);
transmitting signals from the frame interpolator (102) and the local illumination calculation unit (103) to a pixel adjuster (106) and with means to output signals to a display controller (107) of the display unit (108);
the display controller applying control signals to the display unit (108) in response to the signals output from the pixel adjuster (106) such that transmittance of each pixel of the display unit (108) is adjusted,
the pixel adjuster (106) and the display controller (107) cooperating such that the display unit (108) displays an image with a brightness level of each pixel adjusted by the pixel adjuster (106), the image corresponding to the output from the frame interpolator (102), by adjusting the transmittance of each pixel of the display unit (108) in response to the target amount of light emitted by the corresponding section of the backlight unit (105) calculated by the local illumination calculation unit (103),
**characterized in that**
the frame interpolator (102) comprises a difference value calculator (304), which calculates a difference value between an n-th frame and a consecutive (n+1)-th frame; and a sub-frame generator (304), which generates an (n+1)-th sub-frame by applying the calculated difference value to the (n+1)-th frame; and
wherein the frame interpolator (102) outputs the (n+1)-th sub-frame to the pixel adjuster (106) after the (n+1)-th frame while it receives an (n+2)-th frame, which is consecutive to the (n+1)-th frame and outputs the (n+2)-th frame thereafter.

8. The method of claim 7, wherein the transmittance of the (n+1)-th sub-frame is adjusted according to a pixel brightness of the (n+1)-th sub-frame and the target light amount calculated based on the (n+1)-th frame.

## Patentansprüche

1. Anzeigevorrichtung, umfassend:
eine Hintergrundbeleuchtungseinheit (105) mit einer Mehrzahl von Abschnitten, die jeweils ein Licht erzeugen;
eine Anzeigeeinheit (108) mit einer Mehrzahl von Pixeln, die den Durchgang des Lichtes ermöglichen;
einen Bildsignalempfänger (101) mit Mitteln zum Empfangen eines Bildsignals mit einer Mehrzahl aufeinanderfolgender Einzelbilder und mit Mitteln zur sequenziellen Ausgabe der Einzelbilder in einen Bildinterpolator (102);
eine lokale Beleuchtungsberechnungseinheit (103) mit Mitteln zum Berechnen einer Zielmenge des Lichtes für die Abschnitte der Hintergrundbeleuchtungseinheit (105) und mit Mitteln zur Ausgabe von Signalen an eine Hintergrundbeleuchtungssteuerung (104) der Hintergrundbeleuchtungseinheit (105),
eine Pixeleinstellvorrichtung (106) mit Mitteln zum Empfangen von Signalen vom Bildinterpolator (102) und der lokalen Beleuchtungsberechnungseinheit (103) und mit Mitteln zum Ausgeben von Signalen an eine Anzeigesteuerung (107) der Anzeigeeinheit (108); wobei die Anzeigesteuerung (107) dazu ausgeführt ist, als Reaktion auf die von der Pixeleinstellvorrichtung (106) ausgegebenen Signale Steuersignale an die Anzeigeeinheit (108) anzulegen, so dass die Übertragung jedes Pixels der Anzeigeeinheit (108) eingestellt wird,
wobei die Pixeleinstellvorrichtung (106) und die Anzeigesteuerung (107) so ausgeführt sind, dass die Anzeigeeinheit (108) ein Bild mit einem von der Pixeleinstellvorrichtung (106) eingestellten Helligkeitswert jedes Pixels anzeigt, wobei das Bild der Ausgabe vom Bildinterpolator (102) entspricht, indem die Übertragung jedes Pixels der Anzeigeeinheit (108) als Reaktion auf die vom entsprechenden Abschnitt der Hintergrundbeleuchtungseinheit (105) abgegebene Lichtzielmenge gemäß Berechnung durch die lokale Beleuchtungsberechnungseinheit (103) eingestellt wird,
**dadurch gekennzeichnet, dass**
der Bildinterpolator (102) einen Differenzwertrechner (305) umfasst, der dazu ausgeführt ist, einen Differenzwert zwischen einem n-ten Einzelbild und einem darauf folgenden (n+1)-ten Einzelbild zu berechnen; und ferner einen Teilbildgenerator (304), der dazu ausgeführt ist, ein (n+1)-tes Teilbild durch Anwendung des berechneten Differenzwertes auf das (n+1)-te Einzelbild zu erzeugen; und
wobei der Bildinterpolator (102) dazu ausgeführt ist, das (n+1)-te Teilbild an die Pixeleinstellvorrichtung (106) nach dem (n+1)-ten Einzelbild und während des Empfangs eines (n+2)-ten Einzelbildes, das auf das (n+1)-te Einzelbild folgt, durch den Bildsignal Empfänger (101), auszugeben und danach das (n+2)-te Bild auszugeben.

2. Anzeigevorrichtung gemäß Anspruch 1, wobei der Differenzwertrechner (304) dazu ausgeführt ist, wenigstens einen Bewegungsvektor zwischen dem n-ten und dem (n+1)-ten Bild als Differenzwert zu berechnen und der Teilbildgenerator (305) dazu ausgeführt ist, das (n+1)-te Teilbild durch eine Verschiebung der Positionen von Pixeln im (n+1)-ten Bild in eine Richtung des vom Differenzwertrechner (304) berechneten Bewegungsvektors zu erzeugen.

3. Anzeigevorrichtung gemäß Anspruch 2, wobei die Anzeigevorrichtung ferner Mittel zur Bestimmung eines Korrelationswerts zwischen dem n-ten Bild und dem (n+1)-ten Bild umfasst; wobei der Bildinterpolator (102) dazu ausgeführt ist, das (n+1)-te Teil Bild äquivalent dem (n+1)-ten Bild zu erzeugen, wenn der Korrelationswert unter einem bestimmten Schwellenwert liegt.

4. Anzeigevorrichtung gemäß Anspruch 1, wobei der Bildinterpolator (102) zwei Bildspeicher zum Speichern des n-ten Bildes bzw. des (n+1)-ten Bildes umfasst, und
die lokale Beleuchtungsberechnungseinheit (103) dazu ausgeführt ist, das (n+1)-te Bild aus einem der zwei Bildspeicher auszulesen, um die Lichtzielmenge zu berechnen.

5. Anzeigevorrichtung gemäß Anspruch 1, wobei die lokale Beleuchtungsberechnungseinheit (103) umfasst:
einen Verteilungsrechner (501), der dazu ausgeführt ist, eine Helligkeitsverteilung der Pixel des (n+1)-ten Bildes mit Bezug auf jeden Abschnitt zu berechnen;
einen Helligkeitsrechner (502), der dazu ausgeführt ist, sequenziell eine Anzahl von Pixeln von einem Pixel mit einem dunkelsten Wert auf Basis der Helligkeitsverteilung der Pixel mit Bezug zu jedem Abschnitt zu zählen, und dazu ausgeführt ist, die Helligkeit zu berechnen, wenn die Anzahl der Pixel einen festgelegten Wert überschreitet;
eine Raumeinstellvorrichtung (503), die dazu ausgeführt ist, einen gewichteten Durchschnitt der für jeden Abschnitt berechneten Helligkeit und der für die an jeden Abschnitt angrenzenden Abschnitte berechneten Helligkeit zu berechnen; und
eine Zeiteinstellvorrichtung (504), die dazu ausgeführt ist, einen Zeitdurchschnitt des mit Bezug auf jeden Abschnitt berechneten gewichteten Durchschnitts zu berechnen.

6. Anzeigevorrichtung gemäß Anspruch 1, wobei die Pixeleinstellvorrichtung (106) dazu ausgeführt ist, die Übertragung des (n+1)-ten Teilbildes gemäß der Pixelhelligkeit des (n+1)-ten Teilbildes und der von der Beleuchtungsberechnungseinheit (103) berechneten Ziellichtmenge auf Basis der Helligkeit des (n+1)-ten Bildes einzustellen.

7. Verfahren zum Steuern einer Anzeigevorrichtung, die mit einer Hintergrundbeleuchtungseinheit (105) mit einer Mehrzahl von Abschnitten ausgerüstet ist, deren jeder ein Licht erzeugt, und mit einer Anzeigeeinheit (108) mit Pixeln, die den Durchgang des Lichtes ermöglichen, wobei das Verfahren umfasst:
Empfangen eines Bildsignals mit einer Mehrzahl aufeinanderfolgender Einzelbilder und sequenzielle Ausgabe der Einzelbilder an einen Bildinterpolator (102);
Berechnen einer Ziellichtmenge der Abschnitte der Hintergrundbeleuchtungseinheit (105) mit einer lokalen Beleuchtungsberechnungseinheit (103), welche Signale an eine Hintergrundbeleuchtungssteuerung (104) der Hintergrundbeleuchtungseinheit (105) ausgibt;
Übertragen von Signalen vom Bildinterpolator (102) und der lokalen Beleuchtungsberechnungseinheit (103) auf eine Pixeleinstellvorrichtung (106) und mit Mitteln zur Ausgabe von Signalen an eine Anzeigesteuerung (107) der Anzeigeeinheit (108); wobei die Anzeigesteuerung als Reaktion auf die von der Pixeleinstellvorrichtung (106) ausgegebenen Signale Steuersignale an die Anzeigeeinheit (108) anlegt, so dass die Übertragung jedes Pixels der Anzeigeeinheit (108) eingestellt wird,
wobei die Pixeleinstellvorrichtung (106) und die Anzeigesteuerung (107) so zusammenwirken, dass die Anzeigeeinheit (108) ein Bild mit einem von der Pixeleinstellvorrichtung (106) eingestellten Helligkeitswert für jedes Pixel anzeigt, wobei das Bild der Ausgabe vom Bildinterpolator (102) entspricht, indem die Übertragung jedes Pixels der Anzeigeeinheit (108) als Reaktion auf die vom entsprechenden Abschnitt der Hintergrundbeleuchtungseinheit (105) abgegebene Ziellichtmenge gemäß Berechnung durch die lokale Beleuchtungsberechnungseinheit (103) eingestellt wird,
**dadurch gekennzeichnet, dass**
der Bildinterpolator (102) einen Differenzwertrechner (304) umfasst, der einen Differenzwert zwischen einem n-ten Einzelbild und einem folgenden (n+1)-ten Einzelbild berechnet; und einen Teilbildgenerator (304), der ein (n+1)-tes Teilbild durch Anwendung des berechneten Differenzwertes an das (n+1)-te Bild erzeugt; und
wobei der Bildinterpolator (102) das (n+1)-te Teilbild nach dem (n+1)-ten Einzelbild an die Pixeleinstellvorrichtung (106) ausgibt, während er ein (n+2)-tes Einzelbild empfängt, das auf das (n+1)-te Einzelbild folgt, und danach das (n+2)-te Bild ausgibt.

8. Verfahren gemäß Anspruch 7, wobei die Übertragung des (n+1)-ten Teilbildes gemäß einer Pixelhelligkeit des (n+1)-ten Teilbildes und der auf Basis des (n+1)-ten Einzelbildes berechneten Ziellichtmenge eingestellt wird.

## Revendications

1. Un appareil d'affichage, comprenant :
Une unité de rétroéclairage (105) ayant une pluralité de sections générant chacune une lumière ;
Une unité d'affichage (108) ayant une pluralité de pixels permettant à la lumière de passer au travers ;
Un récepteur de signal d'image (101) avec un moyen de recevoir un signal d'image ayant une pluralité de trames consécutives et avec un moyen de faire séquentiellement sortir les trames vers un interpolateur de trame (102);
Une unité de calcul d'éclairage local (103) avec un moyen de calculer une quantité cible de lumière pour les sections de l'unité de rétroéclairage (105) et avec un moyen de faire sortir des signaux vers un contrôleur de rétroéclairage (104) de l'unité de rétroéclairage (105)
Un ajusteur de pixel (106) avec un moyen de recevoir des signaux à partir de l'interpolateur de trame (102) et l'unité de calcul d'éclairage local (103) et avec un moyen de faire sortir des signaux vers un contrôleur d'affichage (107) de l'unité d'affichage (108) ; le contrôleur d'affichage (107) étant disposé pour appliquer des signaux de contrôle à l'unité d'affichage (108) en réponse aux signaux sortant de l'ajusteur de pixel (106) de sorte que la transmittance de chaque pixel de l'unité d'affichage (108) est ajustée,
Où l'ajusteur de pixel (106) et le contrôleur d'affichage (107) sont disposés de sorte que l'unité d'affichage (108) affiche une image avec un niveau de luminosité de chaque pixel ajusté par l'ajusteur de pixel (106), l'image correspondant à la sortie de l'interpolateur de trame (102), en ajustant la transmittance de chaque pixel de l'unité d'affichage (108) en réponse à la quantité cible de lumière émise par la section correspondante de l'unité de rétroéclairage (105) calculée par l'unité de calcul d'éclairage local (103),
**Caractérisé en ce que**
L'interpolateur de trame (102) comprend un calculateur de valeur de différence (305), disposé pour calculer une valeur de différence entre une n^{ième} trame et une (n+1)^{ième} trame consécutive ; et un générateur de sous-trame (304), disposé pour générer une (n+1)^{ième} sous-trame en appliquant la valeur de différence calculée à la (n+1)^{ième} trame ; et
Où l'interpolateur de trame (102) est disposé pour faire sortir la (n+1)^{ième} sous-trame vers l'ajusteur de pixel (106) après la (n+1)^{ième} trame et pendant la réception d'une (n+2)^{ième} trame, qui est consécutive à la (n+1)^{ième} trame, par le récepteur de signal d'image (101), et pour faire sortir la (n+2)^{ième} trame ensuite.

2. L'appareil d'affichage de la revendication 1, où le calculateur de valeur de différence (304) est disposé pour calculer au moins un vecteur de mouvement entre les n^{ième} et (n+1)^{ième} trames comme valeur de différence, et le générateur de sous-trame (305) est disposé pour générer la (n+1)^{ième} sous-trame en changeant les positions des pixels dans la (n+1)^{ième} trame le long d'un sens du vecteur de mouvement calculé par le calculateur de valeur de différence (304).

3. L'appareil d'affichage de la revendication 2, où l'appareil d'affichage comprend de plus des moyens pour déterminer une valeur de corrélation entre la n^{ième} trame et la (n+1)^{ième} trame ; où l'interpolateur de trame (102) est disposé pour générer la (n+1)^{ième} sous-trame égale à la (n+1)^{ième} trame lorsque la valeur de corrélation est en dessous d'un seuil donné.

4. L'appareil d'affichage de la revendication 1, où l'interpolateur de trame (102) comprend deux mémoires de trame pour stocker la n^{ième} trame et la (n+1)^{ième} trame, respectivement, et
L'unité de calcul d'éclairage local (103) est disposé pour lire la (n+1)^{ième} trame à partir d'une des deux mémoires de trame pour calculer la quantité cible de lumière.

5. L'appareil d'affichage de la revendication 1, où l'unité de calcul d'éclairage local (103) comprend :
Un calculateur de distribution (501), disposé pour calculer une distribution de luminosité de pixels de la (n+1)^{ième} trame par rapport à chaque section ;
Un calculateur de luminosité (502), disposé pour compter séquentiellement un nombre de pixels à partir d'un pixel ayant un niveau le plus sombre basé sur la distribution de la luminosité des pixels par rapport à chaque section, et disposé pour calculer la luminosité lorsque le nombre de pixels dépasse une valeur prédéterminée ;
Un ajusteur spatial (503), arrangé pour calculer une moyenne pondérée de la luminosité calculée pour chaque section et une luminosité calculée pour des sections adjacentes à chaque section ; et
Un ajusteur temporaire (504), disposé pour calculer une moyenne de temps de la moyenne pondérée calculée par rapport à chaque section.

6. L'appareil d'affichage de la revendication 1, où l'ajusteur de pixel (106) est disposé pour ajuster la transmittance de la (n+1)^{ième} sous-trame selon la luminosité de pixel de la (n+1)^{ième} sous-trame et la quantité cible de la lumière calculé par l'unité de calcul d'éclairage local (103) basée sur la luminosité de la (n+1)^{ième} trame.

7. Une méthode commandant un appareil d'affichage pourvu d'une unité de rétroéclairage (105) ayant une pluralité de sections, chacune générant une lumière et une unité d'affichage (108) ayant des pixels qui permettent à la lumière de passer au travers, la méthode comprenant :
La réception d'un signal d'image ayant une pluralité de trames consécutives et faisant séquentiellement sortir les trames vers un interpolateur de trame (102) ;
Le calcul d'une quantité de lumière cible des sections de l'unité de rétroéclairage (105) avec une unité de calcul d'éclairage local (103), qui fait sortir des signaux vers un contrôleur de rétroéclairage (104) de l'unité de rétroéclairage (105) ;
La transmission de signaux à partir de l'interpolateur de trame (102) et de l'unité de calcul d'éclairage local (103) vers un ajusteur de pixel (106) et
avec un moyen de faire sortir des signaux vers un contrôleur d'affichage (107) de l'unité d'affichage (108) ; le contrôleur d'affichage appliquant des signaux de contrôle à l'unité d'affichage (108) en réponse à la sortie de signaux depuis l'ajusteur de pixel (106) de sorte que la transmittance de chaque pixel de l'unité d'affichage (108) soit ajustée,
L'ajusteur de pixel (106) et le contrôleur d'affichage (107) coopérant de sorte que l'unité d'affichage (108) affiche une image avec un niveau de luminosité de chaque pixel ajusté par l'ajusteur de pixel (106), l'image correspondant à la sortie de l'interpolateur de trame (102), en ajustant la transmittance de chaque pixel de l'unité d'affichage (108) en réponse à la quantité cible de lumière émise par la section correspondante de l'unité de rétroéclairage (105) calculée par l'unité de calcul d'éclairage local (103),
**Caractérisé en ce que**
L'interpolateur de trame (102) comprend un calculateur de valeur de différence (304), qui calcule une valeur de différence entre une n^{ième} trame et une (n+1)^{ième} trame consécutive ; et un générateur de sous-trame (304), qui génère une (n+1)^{ième} sous-trame en appliquant la valeur de différence calculée à la (n+1)^{ième} trame ; et
Où l'interpolateur de trame (102) fait sortir la (n+1)^{ième} sous-trame vers l'ajusteur de pixel (106) après la (n+1)^{ième} trame alors qu'il reçoit un (n+2)^{ième} trame, qui est consécutive à la (n+1)^{ième} trame et fait sortir la (n+2)^{ième} trame ensuite.

8. La méthode de la revendication 7, où la transmittance de la (n+1)^{ième} sous-trame est ajustée selon une luminosité de pixel de la (n+1)^{ième} sous-trame et la quantité de lumière cible calculée sur la base de la (n+1)^{ième} trame.
